(19) Europäisches Patentamt
European Patent Office
Office européen des brevets

(11) **EP 4 654 501 A1**

(12) **EUROPEAN PATENT APPLICATION**
published in accordance with Art. 153(4) EPC

(43) Date of publication:
**26.11.2025 Bulletin 2025/48**

(21) Application number: **23931396.8**

(22) Date of filing: **06.04.2023**

(51) International Patent Classification (IPC):
***H04L 1/00*** *(2006.01)*

(52) Cooperative Patent Classification (CPC):
**H04L 1/00**

(86) International application number:
**PCT/CN2023/086639**

(87) International publication number:
**WO 2024/207327 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• LI, Bin
  **Shenzhen, Guangdong 518129 (CN)**
• TANG, Zihan
  **Shenzhen, Guangdong 518129 (CN)**
• LI, Ying
  **Shenzhen, Guangdong 518129 (CN)**

(74) Representative: **Thun, Clemens et al
Mitscherlich PartmbB
Patent- und Rechtsanwälte
Karlstraße 7
80333 München (DE)**

(54) **METHOD FOR TRANSMITTING SIGNAL, METHOD FOR RECEIVING SIGNAL, AND COMMUNICATION APPARATUS**

(57) This application provides a signal sending method, a signal receiving method, and a communication apparatus. In a process in which a first communication apparatus (a signal transmitter) generates a superposed signal based on information about at least two second communication apparatuses (signal receivers), orthogonal spreading is introduced, so that interference between the at least two second communication apparatuses is close to Gaussian distribution. Therefore, in a process of decoding the superposed signal, any second communication apparatus serving as a receiver processes signals of other second communication apparatuses as Gaussian noise. Because the signals of the other second communication apparatuses are close to the Gaussian distribution, a transmission rate closer to a Shannon theoretical limit may be obtained, so that a wireless communication transmission rate may be improved.

<u>200</u>

First communication apparatus

k second communication apparatuses
Second communication apparatus j

210: Obtain k pieces of first information, where the k pieces of first information correspond to the k second communication apparatuses, k≥2, and k is an integer

220: Obtain k modulated signals based on the k pieces of first information

230: Separately perform orthogonal spreading on the k modulated signals to obtain k first signals, where orthogonal spreading on a first modulated signal in the k modulated signals includes: multiplying modulated symbols included in the first modulated signal respectively by corresponding vectors of a full-rank orthogonal matrix, and then performing summation

240: Obtain a superposed signal related to the k second communication apparatuses based on the k first signals

250: Superposed signal

260: Perform decoding processing on the superposed signal to determine a signal belonging to the second communication apparatus j, where the decoding processing includes de-orthogonal spreading, and the de-orthogonal spreading is an inverse process of the orthogonal spreading

FIG. 8

Processed by Luminess, 75001 PARIS (FR)

## Description

### TECHNICAL FIELD

Embodiments of this application relate to the field of wireless communication technologies, and more specifically, to a signal sending method, a signal receiving method, and a communication apparatus.

### BACKGROUND

On a broadcast channel, when a base station sends different information to a plurality of users, to avoid impact caused by interference, information transmission is usually performed in a mode of orthogonal multiple access, for example, time division multiple access (time division multiple access, TDMA), frequency division multiple access (frequency division multiple access, FDMA), and code division multiple access (code division multiple access, CDMA). The inter-user interference can be avoided in such a transmission mode of orthogonal multiple access, but the transmission mode of orthogonal multiple access is not optimal from a perspective of a transmission rate.

To maximize a wireless communication transmission rate, superposition coding (superposition coding, SC) is proposed. The superposition coding enables a plurality of users in a wireless communication system to share limited resources in a transmission mode of non-orthogonal multiple access, thereby effectively improving spectral efficiency of wireless communication. A basic idea of the superposition coding is to allocate different powers to signals of different users and then perform superposition on the signals. A superposed signal is directly broadcast to all the users. Different users obtain needed information according to different demodulation rules. In the superposition coding, inter-user interference is usually processed as Gaussian noise at a decoder. However, in a conventional superposition coding scheme, inter-user interference is actually not in Gaussian distribution. Therefore, an achievable transmission rate does not yet reach a theoretical limit, and needs to be improved.

### SUMMARY

This application provides a signal sending method and a signal receiving method, to improve a wireless communication transmission rate.

According to a first aspect, a signal sending method is provided, and is applied to a first communication apparatus, for example, a communication device, a chip, a chip system, a hardware circuit, a software module, or a combination of a hardware circuit and a software module. The first communication apparatus corresponds to a signal transmitter, and the method may include:

obtaining k pieces of first information, where the k pieces of first information correspond to k second communication apparatuses, k≥2, and k is an integer;

obtaining k modulated signals based on the k pieces of first information;

separately performing orthogonal spreading on the k modulated signals to obtain k first signals, where orthogonal spreading on a first modulated signal in the k modulated signals includes: multiplying modulated symbols included in the first modulated signal respectively by corresponding vectors of a full-rank orthogonal matrix, and then performing summation; and the first modulated signal is any modulated signal in the k modulated signals;

obtaining a superposed signal related to the k second communication apparatuses based on the k first signals; and

sending the superposed signal.

In technical solutions of this application, in a process in which the first communication apparatus (namely, the signal transmitter) generates the superposed signal based on information about at least two second communication apparatuses (namely, signal receivers), the orthogonal spreading is introduced, so that interference between the at least two second communication apparatuses is close to Gaussian distribution. Therefore, in a process of decoding the superposed signal, any second communication apparatus serving as a receiver processes signals of other second communication apparatuses as Gaussian noise. Because the signals of the other second communication apparatuses are close to the Gaussian distribution, a transmission rate closer to a Shannon theoretical limit may be obtained, so that a wireless communication transmission rate may be improved.

Specifically, the orthogonal spreading on the k modulated signals may be implemented by multiplying each of the k modulated signals by a full-rank orthogonal matrix.

With reference to the first aspect, in some implementations of the first aspect, obtaining the superposed signal related to the k second communication apparatuses based on the k first signals includes:

allocating different powers to the k first signals, and then performing superposition on the k first signals, to obtain the superposed signal.

In this implementation, different full-rank orthogonal matrices may be selected for different second communication apparatuses to perform orthogonal spreading. After orthogonal spreading is performed on signals of the k second communication apparatuses separately, different powers are allocated to the signals for superposition, to obtain the superposed signal. After the orthogonal spreading, the signals of the second communication apparatuses have orthogonal characteristics. Therefore, after a second communication apparatus performs de-orthogonal spreading, interference inside the second communication apparatus is canceled, and only interference between second communication apparatuses exists. In this case, the second communication apparatus processes signals of other second communication apparatuses as Gaussian noise, to obtain a transmission rate closer to a theoretical limit.

In addition, in this application, the first communication apparatus corresponds to the transmitter, and the second communication apparatus corresponds to the receiver. In an example, the first communication apparatus is a network device, and the second communication apparatus is a UE. In this example, the interference inside the second communication apparatus is intra-user interference, and the interference between the second communication apparatuses is inter-user interference. Details are not described below again.

With reference to the first aspect, in some implementations of the first aspect, obtaining the superposed signal related to the k second communication apparatuses based on the k first signals includes:

separately performing inner interleaving on the k first signals to obtain k second signals; and
allocating different powers to the k second signals, and then performing superposition on the k second signals, to obtain the superposed signal.

In this implementation, same full-rank orthogonal matrices may be selected for different second communication apparatuses to perform orthogonal spreading. However, different interleavers need to be cascaded subsequently for orthogonal spreading modules respectively to reduce correlation between full-rank orthogonal matrices, so as to ensure orthogonal characteristics of signals of the second communication apparatuses that use the same full-rank orthogonal matrices. Therefore, after a second communication apparatus performs de-orthogonal spreading, interference inside the second communication apparatus is canceled, and only interference between second communication apparatuses exists. In this case, the second communication apparatus uses signals of other second communication apparatuses as Gaussian noise, to obtain a transmission rate closer to a theoretical limit.

With reference to the first aspect, in some implementations of the first aspect, the k modulated signals include a same quantity of modulated symbols, or at least two of the k modulated signals include different quantities of modulated symbols.

In this implementation, orthogonal spreading may be performed on information that is of any length and that is of the second communication apparatus.

With reference to the first aspect, in some implementations of the first aspect, the k modulated signals include one or more second modulated signals, and a full-rank orthogonal matrix used for performing orthogonal spreading on the one or more second modulated signals is a Walsh matrix.

In this implementation, orthogonal spreading may be performed on information that is of the second communication apparatus and whose length is a power of 2.

With reference to the first aspect, in some implementations of the first aspect, obtaining the k modulated signals based on the k pieces of first information includes:

separately modulating the k pieces of first information to obtain the k modulated signals; or
separately performing channel coding and modulation on the k pieces of first information to obtain the k modulated signals.

In this implementation, the information about the second communication apparatus can be directly modulated, or modulated after the channel coding.

According to a second aspect, a signal receiving method is provided, and is applied to a second communication apparatus, for example, a communication device, a chip, a chip system, a hardware circuit, a software module, or a combination of a hardware circuit and a software module. For example, technical solutions of this application may include k second communication apparatuses, where $k \geq 2$ and is an integer. The following uses one of the k second communication apparatuses (for example, a second communication apparatus j) as an example for description. The second communication apparatus corresponds to a signal receiver, and the method may include:

receiving a superposed signal from a first communication apparatus, where the superposed signal is related to the k second communication apparatuses, the second communication apparatus j is one of the k second communication apparatuses, $k \geq 2$ and k is an integer, $1 \leq j \leq k$, and j is an integer; and
performing decoding processing on the superposed signal to determine a signal belonging to the second communication apparatus j, where the decoding processing includes de-orthogonal spreading; the de-orthogonal spreading is an inverse process of performing, by the first communication apparatus, orthogonal spreading on a modulated signal j corresponding to the second communication apparatus j; and the orthogonal spreading on the modulated signal j corresponding to the second communication apparatus j includes: multiplying modulated symbols included in the modulated signal j respectively by corresponding vectors of a full-rank orthogonal matrix, and then performing summation.

With reference to the second aspect, in some implementations of the second aspect, performing decoding processing on the superposed signal to determine the signal belonging to the second communication apparatus j includes:

performing decoding processing on the superposed signal based on a decoding order corresponding to successive interference cancellation, where signals from a second communication apparatus k to a second communication apparatus j+1 are used as Gaussian noise, the decoding order is from the second communication apparatus k to a second communication apparatus 1, and $1 \leq j < k$; or
performing decoding processing on the superposed signal, where signals from a second communication apparatus 1 to a second communication apparatus k-1 are used as Gaussian noise, and j=k.

With reference to the second aspect, in some implementations of the second aspect, the decoding processing further includes de-interleaving, and the de-interleaving is performed before the de-orthogonal spreading.

With reference to the second aspect, in some implementations of the second aspect, the decoding processing further includes demodulation, and the demodulation is performed after the de-orthogonal spreading; or
the decoding processing further includes demodulation and channel decoding, and the demodulation is performed after the de-orthogonal spreading.

According to a third aspect, this application provides a communication apparatus. The communication apparatus may include modules that are in one-to-one correspondence with methods/operations/steps/actions that are configured to perform the first aspect to the second aspect. The module may be a hardware circuit, may be software, or may be implemented by a hardware circuit in combination with software. The communication apparatus may be a sending device or a receiving device, or a chip or a circuit used for a sending device or a receiving device.

In an implementation, the communication apparatus is a communication device. For example, the communication device may include a communication unit and/or a processing unit. The communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an example, the communication apparatus is a terminal device, or is a chip, a chip system, a circuit, or the like disposed in the terminal device. In another example, the communication apparatus is a network device, or is a chip, a chip system, a circuit, or the like disposed in the network device.

According to a fourth aspect, this application provides a communication apparatus. The communication apparatus includes a processor, and the processor is configured to execute a computer program or instructions stored in a memory, to perform the method according to the first aspect, the second aspect, or any one of the implementations of the first aspect or the second aspect. Optionally, the communication apparatus further includes the memory. The communication apparatus may be a sending device or a receiving device, or a chip or a circuit used for a sending device or a receiving device.

According to a fifth aspect, this application provides a communication apparatus. The communication apparatus includes a processing circuit and a communication interface, and is configured to perform the method according to the first aspect, the second aspect, or any one of the implementations of the first aspect or the second aspect. For example, the communication interface may be a transceiver, a hardware circuit, a bus, a module, a pin, or a communication interface of another type.

According to a sixth aspect, this application further provides a computer program. When the computer program is run on a computer, the computer is enabled to perform the method according to the first aspect, the second aspect, or any one of the implementations of the first aspect or the second aspect.

According to a seventh aspect, this application further provides a computer program product, including instructions. When the instructions are run on a computer, the computer is enabled to perform the method according to the first aspect, the second aspect, or any one of the implementations of the first aspect or the second aspect.

According to an eighth aspect, this application further provides a computer-readable storage medium. The computer-readable storage medium stores a computer program or instructions. When the computer program or the instructions are run on a computer, the computer is enabled to perform the method according to the first aspect, the second aspect, or any one of the implementations of the first aspect or the second aspect.

According to a ninth aspect, this application further provides a chip. The chip is configured to read a computer program stored in a memory, to perform the method according to the first aspect, the second aspect, or any one of the implementations of the first aspect or the second aspect, or the chip includes a circuit configured to perform the method according to the first aspect, the second aspect, or any one of the implementations of the first aspect or the second aspect. Optionally, the chip further includes a communication interface. The communication interface is configured to transmit to-be-processed data and/or information to the circuit. Optionally, the communication interface is further configured to output processed data and/or information about the circuit.

According to a tenth aspect, this application further provides a chip system. The chip system includes a processor, configured to support an apparatus in implementing the method according to the first aspect, the second aspect, or any one of the implementations of the first aspect or the second aspect. In a possible design, the chip system further includes a memory, and the memory is configured to store a program and data that are necessary for the apparatus. The chip system may include a chip, or may include a chip and another discrete component.

According to an eleventh aspect, this application provides a communication system, including the foregoing first communication apparatus and the foregoing second communication apparatus. Optionally, the communication system includes at least two second communication apparatuses. For example, the first communication apparatus is a sending device, for example, a network device, and the second communication apparatus is a receiving device, for example, a terminal device.

For technical effects of the solutions provided in any one of the second aspect to the eleventh aspect or any one of the implementations of the second aspect to the eleventh aspect, refer to descriptions of corresponding solutions in the first aspect. Details are not described again.

**BRIEF DESCRIPTION OF DRAWINGS**

FIG. 1 is a diagram of a scenario in which a plurality of users perform downlink wireless communication;
FIG. 2 is a diagram of resource allocation for each user in a TDMA transmission mode;
FIG. 3 is a diagram of performing signal transmission by using a superposition coding scheme;
FIG. 4 is a diagram of decoding a signal $x_1$ by a user 1 by using a successive interference cancellation algorithm;
FIG. 5 is a diagram of a decoding process of a user k in a superposition coding scheme;
FIG. 6 is a system block diagram applicable to a transmitter according to an embodiment of this application;
FIG. 7 is a diagram of a decoding process applicable to a receiver according to an embodiment of this application;
FIG. 8 is a schematic flowchart of a signal sending and receiving method according to this application;
FIG. 9 shows an example of a signal sending and receiving method according to this application;
FIG. 10 shows a simulation result of an example of a signal sending and receiving method according to this application;
FIG. 11 shows another example of a signal sending and receiving method according to this application;
FIG. 12 shows a simulation result of another example of a signal sending and receiving method according to this application;
FIG. 13 is a diagram of transmit power allocation for different UEs in an example of a solution of this application;
FIG. 14 shows a performance comparison between a conventional TDMA scheme and a superposition coding scheme according to this application;
FIG. 15 to FIG. 17 show performance simulation results of a superposition coding scheme in which polar code is used as a channel coding scheme according to this application;
FIG. 18 to FIG. 23 show performance simulation results of a superposition coding scheme in which 5G NR LDPC code is used as a channel coding scheme according to this application;
FIG. 24 is a block diagram of a communication apparatus 1000 according to this application; and
FIG. 25 is a block diagram of a communication apparatus 1100 according to this application.

**DESCRIPTION OF EMBODIMENTS**

The following describes technical solutions of embodiments in this application with reference to accompanying drawings.

The technical solutions in embodiments of this application may be applied to various communication systems, such as a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a 5th generation (5th generation, 5G) system or a new radio (new radio, NR) system, a 6th generation (6th generation, 6G) system, a non-terrestrial network (Non-terrestrial network, NTN) system like a satellite communication system, and a future mobile communication system that is applicable. The satellite communication system may include a satellite base station and a terminal device. The satellite base station provides a communication service for the terminal device. Optionally, the satellite base station may also communicate with a ground base station. Optionally, a satellite may be a non-ground base station, a non-ground device, or the like, for example, an uncrewed aerial vehicle, a hot air balloon, a low-orbit satellite, a middle-orbit satellite, or a high-orbit satellite.

A device in a communication system may send a signal to another device, or receive a signal from another device, where the signal may include information, signaling, data, or the like. The device may alternatively be replaced with a network element, an entity, a network entity, a communication device, a communication module, a node, a communication node, or the like. In this application, the device is used as an example for description.

A communication system applicable to this application may include a sending device (or referred to as a transmitter) and a receiving device (or referred to as a receiver). Optionally, there may be two or more receiving devices. For example, the communication system applicable to this application includes a network device and a terminal device. The network device is an example of the sending device, and the terminal device is an example of the receiving device.

The terminal device in embodiments of this application includes various communication kits (communication kits, where the communication kit may include, for example, an antenna, a power supply template, a cable, and a wireless fidelity (wireless fidelity, Wi-Fi) module), a handheld device, a vehicle-mounted device, or another processing device connected to a wireless modem with a wireless communication function, and may specifically refer to a user equipment (user equipment, UE), a user, an access terminal, a user unit, a user station, a mobile station, a remote station, a remote terminal, and a mobile device, a user terminal, a terminal, a wireless communication device, a user agent, a user apparatus, a wireless modem, a machine type communication device, or another processing device connected to a wireless modem. Alternatively, the terminal device may be a virtual reality (virtual reality, VR) terminal device, an augmented reality (augmented reality, AR) terminal device, a wireless terminal in industrial control (industrial control), a terminal in self driving (self driving), a terminal in remote medical (remote medical), a terminal in a smart grid (smart grid), a terminal in transportation safety (transportation safety), a terminal in a smart city (smart city), a terminal in a smart home (smart home), a terminal device in a future communication network, or the like. Certainly, the terminal device in this application may alternatively refer to a chip, a modem, a system on a chip (system on a chip, SoC), or a communication platform that may include a radio frequency RF part or the like, which are mainly responsible for a related communication function in the device.

In embodiments of this application, a communication apparatus configured to implement a function of the terminal device may be a terminal device, or may be an apparatus that can support the terminal device in implementing the function, for example, a chip, a circuit, or a chip system. The apparatus may be mounted in the terminal device or used in combination with the terminal device. In this application, the chip system may include a chip, or may include the chip and another discrete component.

The network device in embodiments of this application may further include but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a network device in an NTN communication system, and the like. Alternatively, the network device may be a gNB, a TRP, or a TP in the 5G system, or one or a group (that is, a plurality of) of antenna panels of a base station in the 5G system. In addition, the network device may alternatively be a network node that forms a gNB or a TP, for example, a baseband unit (baseband unit, BBU) or a distributed unit (distributed unit, DU). Alternatively, the network device may be a device or the like that undertakes a network side function and that is in a device-to-device (device-to-device, D2D) communication system, a machine-to-machine (machine-to-machine, M2M) communication system, an internet of things (Internet of Things, IoT), an internet of vehicles communication system, or another communication system. This is not limited.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), another unit, module, or device with a radio frequency processing function, or the like.

In embodiments of this application, an apparatus configured to implement a function of the network device may be a network device, or may be an apparatus that can support implementation of the function of the network device in this application, for example, a chip, a hardware circuit, a chip system, a software module, or a hardware circuit or a software module. The apparatus may be mounted in the network device or used in combination with the network device. In embodiments of this application, the chip system may include a chip, or may include the chip and another discrete component.

In addition, it should be noted that a "user" mentioned in embodiments of this application refers to a UE or a terminal device, and details are not described below.

For ease of understanding, related technologies in this application are described first.

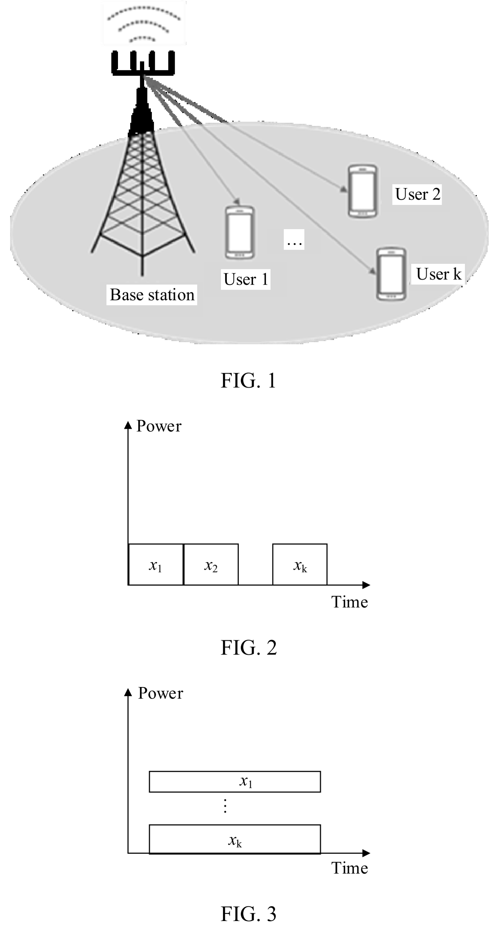

FIG. 1 is a diagram of a scenario in which a plurality of users perform downlink wireless communication. As shown in FIG. 1, on a broadcast channel, when a base station sends different information to the plurality of users, to avoid impact caused by interference, information transfer is usually performed in a mode of orthogonal multiple access. FIG. 1 shows a downlink wireless communication scenario in which the base station sends information to k users. From a user 1 to a user k, a distance to the base station gradually increases. It is assumed that the base station sends mutually independent information, namely, $x_1$, $x_2$, ..., and $x_k$, to the user 1 to the user k respectively. If transmission is performed in a TDMA mode, the user 1 to the user k respectively occupy different slots, and resource allocation for the user 1 to the user k is shown in FIG. 2.

FIG. 2 is a diagram of the resource allocation for each user in the TDMA transmission mode. Information sent by the base station to the user 1 occupies a 1st slot, information sent by the base station to a user 2 occupies a 2nd slot, and so on. A transmission mode of other orthogonal multiple access (for example, FDMA or CDMA) is also similar to that of TDMA, and a single signal can be carried only on a same channel resource at a same moment. Inter-user interference can be avoided in such a transmission mode of orthogonal multiple access, but the transmission mode of orthogonal multiple access is not optimal from a perspective of a rate.

To maximize wireless communication transmission efficiency, a superposition coding (superposition coding, SC) scheme is proposed. Superposition coding enables a plurality of users in a wireless communication system to share limited resources in a transmission mode of non-orthogonal multiple access, thereby effectively improving spectral efficiency of wireless communication. A basic idea of the superposition coding is to allocate different powers to signals of different users and then perform superposition on the signals, to obtain a superposed signal. The superposed signal is directly broadcast to all the users. Different users obtain respective information according to different demodulation rules. In the superposition coding scheme, inter-user interference is usually processed as Gaussian noise at a decoder. However, in an existing superposition coding scheme, inter-user interference is actually not in Gaussian distribution. Therefore, an achievable transmission rate does not yet reach a theoretical limit.

FIG. 3 is a diagram of performing signal transmission by using a superposition coding scheme. As shown in FIG. 3, superposition coding can be used for implementing a non-orthogonal gain based on a broadcast characteristic of radio transmission and a user channel quality difference. It is assumed that a base station sends different information to k different users on a broadcast channel, and from a user 1 to a user k, a distance from the user to the base station gradually increases. The base station superposes information about the user 1 to the user k, which is represented as $x_1$, $x_2$, ..., and $x_k$, to obtain a sent signal (namely, a superposed signal) as follows:

$$u = \sqrt{\alpha_1}x_1 + \sqrt{\alpha_2}x_2 + \cdots + \sqrt{\alpha_k}x_k$$

$a_i \in [0,1]$ represents a ratio of a power that is allocated to a signal of a user i to a transmit power, and $\sum_{i=1}^{k}\alpha_i=1$. Assuming that a channel condition of the user i is better than that of a user j, when a signal $x_j$ can be successfully received by the user j, the user i can also successfully decode the signal $x_j$. Based on the foregoing fact, a successive interference cancellation (successive interference cancellation, SIC) algorithm is usually used for a receiver to avoid signal interference caused by the superposition coding.

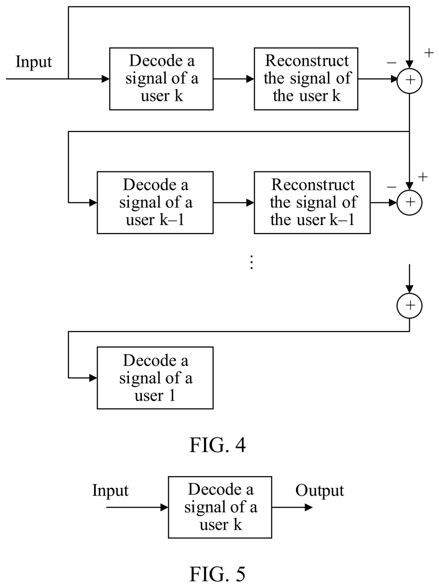

FIG. 4 is a diagram of decoding a signal $x_1$ by a user 1 by using a successive interference cancellation algorithm. As shown in FIG. 4, it is assumed that powers allocated by a network side to a user 1 to a user k is in ascending order, and the order is from the user 1 to the user k. The user 1 first decodes a signal of the user k with a largest power, namely, $x_k$, then reconstructs the signal of the user k, subtracts the signal from a received superposed signal (a signal obtained by subtracting the signal of the user k from the superposed signal is denoted as a superposed signal 1), decodes a signal of a user k-1 currently with a largest power, namely, $x_k$-1, reconstructs the signal of the user k-1, and subtracts the signal of the user k-1 from the superposed signal 1 (a signal obtained by subtracting the signal of the user k-1 from the superposed signal 1 is denoted as a superposed signal 2). Next, a signal of a user k-2 is decoded, and so on, and finally the signal of the user 1 is decoded. Decoding processes of the user 2 to the user k-1 are similar to a decoding process of the user 1, and the successive interference cancellation algorithm is used in all of the decoding processes of the user 2 to the user k-1 and the decoding process of the user 1. A decoding process of the user k is shown in FIG. 5.

FIG. 5 is a diagram of the decoding process of the user k in a superposition coding scheme. As shown in FIG. 5, for the user k, the signal $x_k$ is directly decoded, and other signals (including signals of the user 1 to the user k-1) are processed as Gaussian noise.

Theoretically, it has been proved that a transmission rate of the superposition coding scheme can reach a theoretical limit only when a superposition signal in superposition coding is close to Gaussian distribution. In a conventional superposition coding scheme, a superposed signal does not comply with Gaussian distribution, and a receiver processes inter-user interference as Gaussian noise. Therefore, an achievable transmission rate does not yet reach the theoretical limit.

In this way, this application proposes, based on conventional superposition coding, a superposition coding scheme in which the theoretical limit can be reached. Orthogonal spreading is introduced for a transmitter on the basis of the conventional superposition coding, so that the inter-user interference is close to the Gaussian distribution, and a transmission rate close to the theoretical limit can be achieved. To distinguish from the conventional superposition coding scheme, the superposition coding scheme provided in this application may be referred to as an improved superposition coding scheme or an optimized superposition coding scheme.

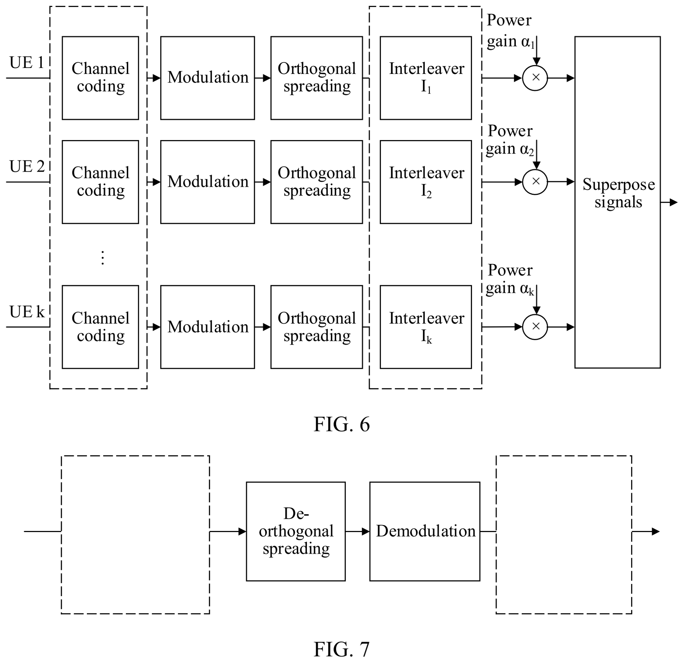

FIG. 6 is a system block diagram applicable to a transmitter according to an embodiment of this application. It is assumed that there are k users (for example, a UE 1 to a UE k) in a broadcast scenario, and the users are independent of each other. At the transmitter, each user first encodes to-be-sent information through channel coding (the channel coding is optional), and then selects a digital modulation scheme based on a channel condition to perform modulation, so as to obtain a modulated signal. A user i is used as an example. It is assumed that the user i performs channel coding (optional) and modulation on to-be-sent information to obtain a modulated signal, and then performs orthogonal spreading on the modulated signal. Optionally, in this application, the orthogonal spreading may be implemented by multiplying the modulated signal by a full-rank orthogonal matrix. Specifically, modulated symbols included in the modulated signal are respectively multiplied by corresponding vectors of a full-rank orthogonal matrix, and then addition is performed. Optionally, the full-rank orthogonal matrix may be selected in two manners. One manner is that different users select different full-rank orthogonal matrices, and correlation between the full-rank orthogonal matrices is extremely low. The other manner is that different users select same full-rank orthogonal matrices, and different interleavers are cascaded to reduce correlation between the full-rank orthogonal matrices. In the former manner, interleaving processing is optional. The user i is used as an example. Assuming that a length of the modulated signal obtained through modulation performed on the information about the user $i$ is $N_i$, orthogonal spreading is performed on the modulated signal corresponding to the user i by using a full-rank orthogonal matrix whose size is $N_i \times N_i$. Optionally, Walsh code may be used as the full-rank orthogonal matrix to perform orthogonal spreading. Because a length of the Walsh code is a power of 2, when the Walsh code is used for performing orthogonal spreading on the modulated signal, the length of the modulated signal is a power of 2. In addition, in this application, the length of the modulated signal is not limited to a power of 2, but orthogonal spreading may be performed on a modulated signal of any length of the user. Therefore, lengths of modulated signals corresponding to different users may be different. It should be understood that, when each user uses a full-rank orthogonal matrix with extremely low correlation to implement the orthogonal spreading, an interleaving process in FIG. 6 is an optional process. In this implementation, after power allocation is performed on an output signal of an orthogonal spreading module corresponding to each of the k users, superposition transmission is performed. If the users use the same full-rank orthogonal matrices, different interleavers need to be cascaded subsequently for orthogonal extending modules of the users respectively. In addition, in this embodiment of this application, to ensure an orthogonal characteristic of a signal of each user, the full-rank orthogonal matrix is a full-rank orthogonal square matrix.

FIG. 7 is a diagram of a decoding process applicable to a receiver according to an embodiment of this application. As shown in FIG. 7, receivers (that is, the foregoing user 1 to user k) each decode a corresponding signal (or corresponding information) by using a successive interference cancellation algorithm. However, a process of decoding the signal of each user in this application is different from a decoding process in a conventional superposition coding scheme. It is assumed that a decoding order of the successive interference cancellation algorithm is from the user k to the user 1. On the basis of this, for any one of k users, using a user j as an example, where $1 \leq j < k$, and j is a positive integer, in a process of decoding a superposed signal by the user j, interference from the user k to a user j+1 is processed as Gaussian noise. When the user j is the user k, the user k processes signals from the user 1 to a user k-1 as Gaussian noise. As shown in FIG. 7, after receiving the superposed signal, the user j first performs de-interleaving (which is an optional step, and if interleaving is performed at a transmitter, de-interleaving is correspondingly performed at a receiver), then performs de-orthogonal spreading, and finally performs demodulation and channel decoding (which is an optional step, and if channel coding is performed at the transmitter, channel decoding is correspondingly performed at the receiver), to obtain a signal of the user j. It should be noted that, because orthogonal spreading is used at the transmitter, signals of all users have an orthogonal characteristic, and the orthogonal characteristic enables the receiver (any user) to effectively cancel intra-user interference after the receiver performs de-orthogonal spreading, and only inter-user interference exists. The orthogonal spreading (or orthogonal spreading and interleaving) is introduced at the transmitter, so that the signals that are of the users and that are obtained through orthogonal spreading are close to Gaussian distribution.

The following provides descriptions by using an example.

It is assumed that there are two users, and a power allocated by a network side to a user 1 is greater than a power allocated to a user 2.

A modulated symbol sequence (namely, a modulated signal) corresponding to the user 1 is [u1 u2 u3 u4], and orthogonal spreading is performed by using a full-rank orthogonal matrix W:

$$W = \begin{bmatrix} w1 \\ w2 \\ w3 \\ w4 \end{bmatrix} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

A modulated symbol sequence corresponding to the user 2 is [v1 v2 v3 v4], and orthogonal spreading is performed by using a full-rank orthogonal matrix X:

$$X = \begin{bmatrix} x1 \\ x2 \\ x3 \\ x4 \end{bmatrix} = \begin{bmatrix} 1 & 1 & 1 & 1 \\ 1 & 1 & -1 & -1 \\ -1 & 1 & 1 & -1 \\ -1 & 1 & -1 & 1 \end{bmatrix}$$

If superposition coding is performed by using the improved superposition coding scheme provided in this application, a superposed signal received by receivers, to be specific, the user 1 to the user k, is:

$$y = \sqrt{\alpha} \ (u1w1 + u2w2 + u3w3 + u4w4) + \sqrt{1-\alpha}(v1x1 + v2x2 + v3x3 + v4x4) + \text{noise}$$

$$(1)$$

According to the successive interference cancellation algorithm, a signal of the user 1 is first decoded. The signal u1 is first decoded for the user 1: Both the left side and the right side of the foregoing formula (1) are divided by $\sqrt{\alpha}$, and then multiplied by transpose of w1. Because w2, w3, and w4 are all orthogonal to w1, the following may be obtained:

$$\frac{y}{\sqrt{\alpha}} w1^T = u1 + \frac{\sqrt{1-\alpha} \ (v1x1 + \ v2x2 + \ v3x3 + \ v4x4) \ w1^T}{\sqrt{\alpha}} + \frac{\text{noise} * \ w1^T}{\sqrt{\alpha}}$$

$$(2)$$

In this case, for the user 1, interference within the user 1 is canceled, and only interference caused by the user 2 to the user 1, that is, inter-user interference, exists. In this case, all parts except u1 on the right side of the equation (2) are considered as noise. Therefore, u1 may be decoded, and similarly, u2, u3, and u4 may be decoded.

It is assumed that there are two users, a signal-to-noise ratio (signal-to-noise ratio, SNR) of a channel of a user 1 is $snr_1 = \frac{P}{\sigma_1{}^2}$, a signal-to-noise ratio of a channel of a user 2 is $snr_2 = \frac{P}{\sigma_2{}^2}$, P represents a total power of a signal on a channel, and $\sigma_1{}^2$ and $\sigma_2{}^2$ respectively represent a noise power of the channel of the user 1 and a noise power of the channel of the user 2 on an additive white Gaussian noise (additive white Gaussian noise, AWGN) channel. Signals needed by the user 1 and the user 2 are $x_1$ and $x_2$ respectively, and powers allocated by a base station to the user 1 and the user 2 are $\alpha$ and 1-$\alpha$ respectively. In this case, a superposed signal sent by the transmitter is $u = \sqrt{\alpha}x_1 + \sqrt{1-\alpha}x_2$. When $snr_1$ > $snr_2$, a signal-to-interference-plus-noise ratio (signal-to-interference-plus-noise ratio, SINR) during decoding $x_2$ by the user 2 is:

$$SINR = \frac{(1-\alpha) \times P}{\sigma_2^2 + \alpha \times P} = \frac{(1-\alpha) \times snr_2}{1 + \alpha \times snr_2}$$

Because superposed interference noise is Gaussian, according to the Shannon theory, a transmission rate of the user 2 may reach $R_2$:

$$R_2 = log_2(1 + \frac{(1 - \alpha) \times snr_2}{1 + \alpha \times snr_2})$$

Because a channel link condition of the user 1 is better, the user 1 needs to first decode information about the user 2, subtract the information about the user 2 from the superposed signal, and then decode information about the user 1. The SNR of the user 1 is:

$$SNR = \frac{\alpha \times P}{\sigma_1^2} = \alpha \times snr_1$$

According to the Shannon theory, a transmission rate of the user 1 may reach $R_1$:

$$R_1 = log_2(1 + \alpha \times snr_1)$$

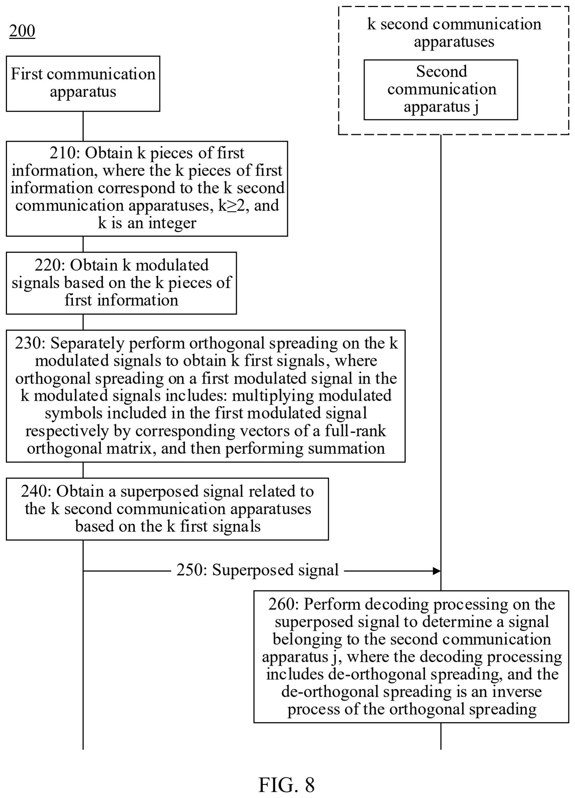

FIG. 8 is a schematic flowchart of a signal sending and receiving method according to this application. A method procedure shown in FIG. 8 is performed by a first communication apparatus and a second communication apparatus. For descriptions of the first communication apparatus and the second communication apparatus, refer to the foregoing descriptions. Details are not described again.

210: The first communication apparatus obtains k pieces of first information, where the k pieces of first information correspond to k second communication apparatuses, $k \geq 2$, and k is an integer.

Optionally, the k pieces of first information may be information to be sent to the k second communication apparatuses. In other words, each of the k pieces of first information corresponds to one of the k second communication apparatuses. First information corresponding to a second communication apparatus j is used as an example. The first information may be an information bit sequence to be sent to the second communication apparatus j, $1 \leq j < k$, and j is a positive integer.

220: The first communication apparatus obtains k modulated signals based on the k pieces of first information.

Specifically, the first communication apparatus separately determines, based on the k pieces of first information, a modulated signal corresponding to each of the k pieces of first information. Optionally, in an implementation, the first communication apparatus performs modulation (for example, digital modulation) on the k pieces of first information, to obtain the k modulated signals. Each of the k modulated signals corresponds to one piece of first information in the k pieces of first information. In this implementation, the modulated signal corresponding to the first information is a sequence of modulated symbols obtained by modulating the first information. In another implementation, the first communication apparatus separately performs channel coding on the k pieces of first information, and then modulates information obtained by performing channel coding on the k pieces of first information, to obtain the k modulated signals. Similarly, in this implementation, the k modulated signals are sequences of modulated symbols obtained by performing digital modulation on the information that is obtained by performing channel coding on the k pieces of first information.

230: The first communication apparatus separately performs orthogonal spreading on the k modulated signals to obtain k first signals, where the orthogonal spreading includes full-rank orthogonal transformation.

In step 230, the first communication apparatus separately performs orthogonal spreading on the k modulated signals. Specifically, each of the k modulated signals may be multiplied by one full-rank orthogonal matrix. It is assumed that a length of a modulated signal i obtained by performing the foregoing modulation (or channel coding and modulation) on first information about a second communication apparatus $i$ is $N_i$. In this case, orthogonal spreading is performed on the modulated signal i by using a full-rank orthogonal square matrix whose size is $N_i \times N_i$, to obtain a first signal corresponding to the second communication apparatus i, where $1 \leq i \leq k$, and i is an integer. A first modulated signal in the k modulated signals is used as an example. Performing orthogonal spreading on the first modulated signal actually means multiplying modulated symbols included in the first modulated signal respectively by corresponding vectors of a full-rank orthogonal matrix, and then performing summation, where the first modulated signal is any modulated signal in the k modulated signals. For example, in the examples related to the foregoing formula (1) and formula (2), the full-rank orthogonal matrix W is represented by using row vectors, and u1w1+u2w2+u3w3+u4w4 in the formula (1) represents that modulated symbols in the modulated signal [u1 u2 u3 u4] are respectively multiplied by the row vectors w1, w2, w3, and w4 of the full-rank orthogonal matrix W, and then, addition is performed. Optionally, the full-rank orthogonal matrix W may alternatively be represented by using column vectors, and the modulated signal is multiplied by transpose of the full-rank orthogonal matrix. In this case, the modulated symbols included in the modulated signal are multiplied by the column vectors of the full-rank orthogonal matrix. Therefore, the "corresponding vector" of the full-rank orthogonal matrix may be a row vector or a column vector of the full-rank orthogonal matrix. This is not limited.

Optionally, in a process of performing orthogonal spreading on the k modulated signals to obtain the k first signals, the first communication apparatus may perform orthogonal spreading on the k modulated signals by using same full-rank orthogonal square matrices respectively, or may perform orthogonal spreading on the k modulated signals by using different full-rank orthogonal square matrices respectively. Optionally, the full-rank orthogonal square matrix may be specifically a Walsh square matrix. Optionally, the full-rank orthogonal matrix is selected in two manners. One manner is that different orthogonal matrices are selected for different users, and correlation between the orthogonal matrices is extremely low. The other manner is that same orthogonal matrices are selected for different users. In this case, after orthogonal spreading is performed, different interleavers need to be cascaded to reduce correlation between orthogonal matrices. Optionally, the k modulated signals may include one or more second modulated signals, and the second modulated signal is a modulated signal on which orthogonal spreading is performed by using Walsh code.

240: The first communication apparatus obtains a superposed signal related to the k second communication apparatuses based on the k first signals.

Optionally, in an implementation, after allocating different powers to the k first signals, the first communication apparatus directly performs superposition to obtain the superposed signal. In another implementation, the first communication apparatus separately performs inner interleaving on the k first signals to obtain k second signals, and performs superposition after allocating different powers to the k second signals, to obtain the superposed signal.

In the foregoing step 230, if the same full-rank orthogonal matrices are used for the k modulated signals, in step 240, interleaving processing may be performed on the first signals obtained through modulation. If different full-rank orthogonal matrices are used for the k modulated signals, in step 240, interleaving processing may be performed or may not be performed on the first signals.

250: The first communication apparatus sends the superposed signal.

A second communication apparatus 1 to a second communication apparatus k separately receive the superposed signal from the first communication apparatus, where k≥2 and k is an integer. Optionally, in step 250, the first communication apparatus sends the superposed signal to the second communication apparatus 1 to the second communication apparatus k in a manner which is not limited to a unicast manner, a multicast manner, or a broadcast manner.

Processes of processing the superposed signal by the second communication apparatus 1 to the second communication apparatus k are similar. The following uses the second communication apparatus j as an example to describe a process of processing the superposed signal at a receiver.

260: The second communication apparatus j performs decoding processing on the superposed signal to determine a signal belonging to the second communication apparatus j, where the decoding processing includes de-orthogonal spreading, $1 \leq j < k$, and j is a positive integer.

It should be understood that the de-orthogonal spreading is an inverse process of the orthogonal spreading, and the orthogonal spreading includes the full-rank orthogonal transformation.

In addition, decoding processing performed by the second communication apparatus j on the superposed signal corresponds to processing performed by the first communication apparatus. For example, if the first communication apparatus sequentially performs modulation and orthogonal spreading on the k pieces of first information, the second communication apparatus j sequentially performs de-orthogonal spreading and demodulation on the superposed signal; if the first communication apparatus sequentially performs channel coding, modulation, orthogonal spreading, and interleaving on the k pieces of first information, the second communication apparatus sequentially performs de-interleaving, de-orthogonal spreading, demodulation, and channel decoding, and the like on the superposed signal. Details are not described again.

In addition, decoders, that is, the second communication apparatus 1 to the second communication apparatus k, still decode respective corresponding signals by using a successive interference cancellation algorithm. For example, it is assumed that a signal decoding order of the receiver in the successive interference cancellation algorithm is from the second communication apparatus k to the second communication apparatus 1. In other words, an order which is a descending order and in which powers are allocated by a network device to the k second communication apparatuses is from the second communication apparatus k to the second communication apparatus 1. In this case, for the second communication apparatus j, in a process in which the second communication apparatus j performs decoding processing on the superposed signal, signals from the second communication apparatus k to a second communication apparatus j+1 are processed as Gaussian noise (interference signals), where $1 \leq j < k$. For the second communication apparatus k, in a process in which the second communication apparatus k performs decoding processing on the superposed signal, signals from the second communication apparatus 1 to a second communication apparatus k-1 are processed as Gaussian noise (namely, interference signals). Because the signals that are of the second communication apparatuses and that are obtained through orthogonal spreading are close to Gaussian distribution, in a decoding process, a second communication apparatus processes signals of other second communication apparatuses as Gaussian noise, so that a transmission rate closer to the Shannon limit can be obtained.

In this embodiment of this application, receivers, namely, the second communication apparatuses, decode the respective signals by using the successive interference cancellation algorithm. However, the decoding process is different from a decoding process of conventional superposition coding. A transmitter performs orthogonal spreading on information about the receivers, so that the information about the receivers has an orthogonal characteristic after orthogonal spreading is performed. The orthogonal characteristic enables the receiver to effectively cancel intra-user interference (that is, inside the second communication apparatus) after the receiver performs de-orthogonal spreading, and only inter-user interference (that is, between second communication apparatuses) exists. It is assumed that the decoding order of the signals corresponding to the k second communication apparatuses in the successive interference cancellation algorithm is from the second communication apparatus k to the second communication apparatus in the forward manner. In a decoding process of the second communication apparatus k, the signals from the second communication apparatus 1 to the second communication apparatus k-1 are all processed as Gaussian noise. In a decoding process of the second communication apparatus j, that is, when 1≤j≤k, the signals from the second communication apparatus k to the second communication apparatus j+1 are processed as Gaussian noise. Because the orthogonal spreading is introduced for the transmitter, when an information sequence of the receiver is long enough, for example, reaches a length threshold, the signals that are obtained through orthogonal spreading and that are of the receivers are close to Gaussian distribution. Herein, a length of the information sequence of the second communication apparatus may be a length of the modulated signal corresponding to the second communication apparatus, a length of an encoding sequence obtained by performing channel coding on the first information corresponding to the second communication apparatus, or the like. It may be understood that, if the encoding sequence is long enough, correspondingly, the length of the modulated signal obtained by modulating the encoding sequence is also long enough. In addition, the modulated signal is also a modulation sequence, and a length of the modulation sequence may be a quantity of modulated symbols obtained by modulating information corresponding to the second communication apparatus. Because the orthogonal spreading is introduced for the transmitter, the inter-user interference is close to the Gaussian distribution. Therefore, the transmitter processes the inter-user interference as the Gaussian noise, and the transmission rate close to the Shannon limit can be obtained.

The following describes the improved superposition coding scheme provided in this application with reference to some examples and simulation results.

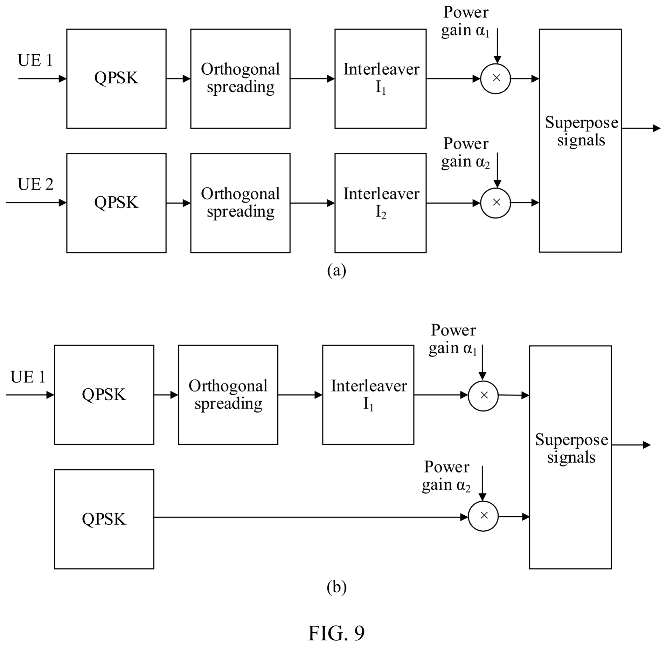

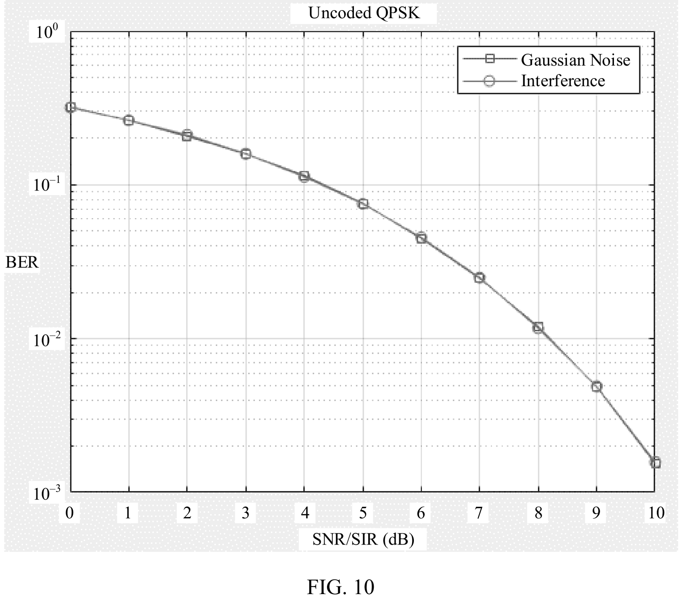

FIG. 9 shows an example of a signal sending and receiving method according to this application. In this example, two users are used as an example to describe a case in which, when channel coding is not performed, interference signals obtained through orthogonal spreading and interleaving are close to Gaussian distribution. This example includes two solutions. Solution 1 is shown in (a) in FIG. 9. Powers $\alpha_1$ and $\alpha_2$ are allocated to a signal of a user 1 and a signal of a user 2 on which quadrature phase shift keying (quadrature phase shift keying, QPSK) modulation, orthogonal spreading, and interleaving are separately performed, and finally superposition is performed. Solution 2 is shown in (b) in FIG. 9. A power $\alpha_1$ is allocated to a signal of a user 1 on which QPSK modulation, orthogonal spreading, and interleaving are performed, and then the signal is superposed on Gaussian noise with a power of $\alpha_2$. In Solution 1, the signal of the user 2 is considered as an interference signal. At a receiver, both Solution 1 and Solution 2 only decode the signal of the user 1, and different SNRs are given. Bit error rates (bit error rates, BERs) or signal-to-interference ratios (signal-to-interference ratios, SIRs) of the two solutions are compared, and simulation results are shown in FIG. 10, where "interference" represents a simulation result of Solution 1, and "Gaussian noise" represents a simulation result of Solution 2. It can be learned from FIG. 10 that, when channel coding is not performed, the interference signals obtained through orthogonal spreading and interleaving are close to the Gaussian distribution.

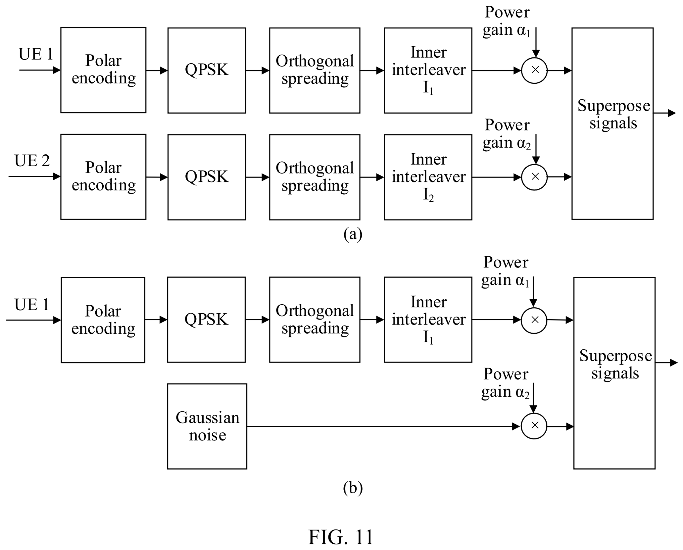

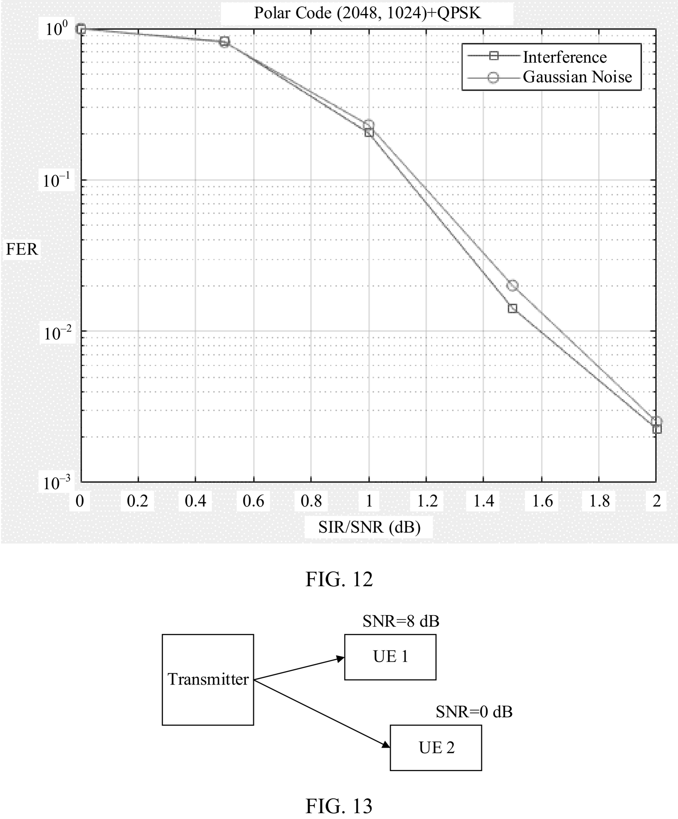

FIG. 11 shows another example of a signal sending and receiving method according to this application. In this example, two users are used as an example to describe a case in which, after channel coding is performed, interference signals obtained through orthogonal spreading and interleaving are close to Gaussian distribution. In this example, polar code with a bit rate 1/2 is used for channel coding, and a code length is 2048. This example also includes two solutions. Solution 1 is shown in (a) in FIG. 11. Powers $\alpha_1$ and $\alpha_2$ are allocated to a signal of a user 1 and a signal of a user 2 on which polar (2048, 1024) encoding, QPSK modulation, orthogonal spreading, and interleaving are separately performed, and finally superposition is performed. In Solution 1, the signal of the user 2 is considered as an interference signal. At a receiver, both solutions only decode the signal of the user 1 and different SNRs are given. Bit error rates (bit error rates, BERs) of the two solutions are compared, and simulation results are shown in FIG. 12, where "interference" represents a simulation result of Solution 1, and "Gaussian noise" represents a simulation result of Solution 2. It can be learned from FIG. 12 that, when the channel coding is included, the interference signals obtained through orthogonal spreading and interleaving are still close to the Gaussian distribution.

In still another example, two users are used as an example to describe a case in which a better transmission rate can be obtained in the solution provided in this application than in a TDMA scheme. Simulation parameters are set as follows: An SNR of a user 1 is 8 dB, and an SNR of a user 2 is 0 dB, as shown in FIG. 13. That is, a channel condition of the user 1 is better than that of the user 2. Therefore, a power allocated by a transmitter to the user 2 is greater than a power allocated to the user 1. Assuming that signals needed by the user 1 and the user 2 are $x_1$ and $x_2$ (which have been normalized) respectively, a superposed signal sent by the transmitter is u = $\sqrt{\alpha}x_1 + \sqrt{1-\alpha}x_2$, where $\alpha \in (0.5, 1]$

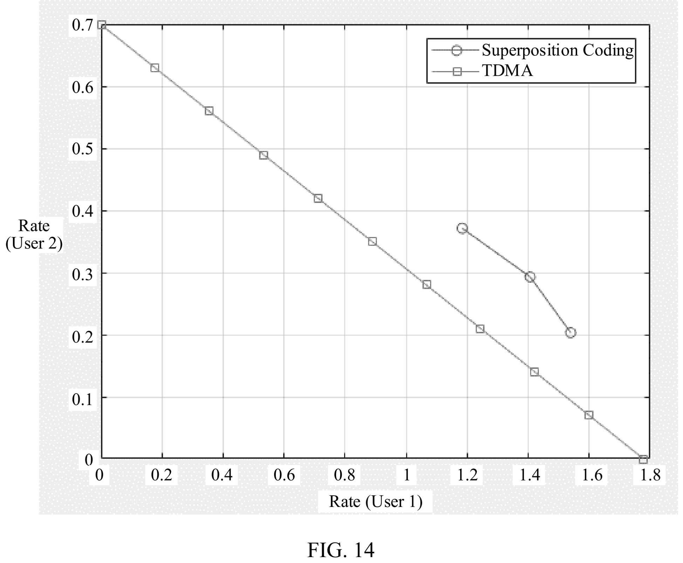

represents a ratio of a power allocated to the signal $x_2$ to a total transmit power. At a receiver, the user 1 first needs to decode the signal of the user 2, then reconstructs the signal of the user 2, subtracts the signal of the user 2 from the superposed signal, and then decodes the signal of the user 1. The user 2 only needs to consider the signal of the user 1 as an interference signal, and directly decodes the signal of the user 2. In this embodiment, the polar code with the bit rate 1/2 is used for channel coding, the code length is set to 2048, a 16-bit cyclic redundancy check (cyclic redundancy check, CRC) and a successive cancellation decoding algorithm in which a quantity of paths is 32 are used for decoding, and a digital modulation scheme is QPSK. In this example, a target frame error rate (frame error rate, FER) is set to 0.001, to find, in a stimulation manner, a maximum channel coding bit rate that enables, when different $\alpha$ are given, both the user 1 and the user 2 to satisfy the target frame error rate. A simulation result is shown in FIG. 14.

In still another example, two users are used as an example to describe a case in which a better transmission rate can be obtained in the solution provided in this application than in a conventional superposition coding scheme. It is assumed that there are the two users, a user 1 is close to a base station, and a user 2 is far away from the base station. That is, a channel condition of the user 1 is better than a channel condition of the user 2.

Assuming that signals needed by the user 1 and the user 2 are $x_1$ and $x_2$ (which have been normalized) respectively, a superposed signal sent by a transmitter is $u = \sqrt{\alpha}x_1 + \sqrt{1-\alpha}x_2$, where $\alpha \in (0, 1]$ represents a ratio of a power allocated to the signal $x_2$ to a total transmit power. At a receiver, the user 1 first needs to decode the signal of the user 2, and then decode information needed by the user 1, and the user 2 needs to decode only information needed by the user 2. Therefore, to compare a transmission rate of the conventional superposition coding scheme with a transmission rate of the solution in this application, only decoding performance of the user 2 needs attention.

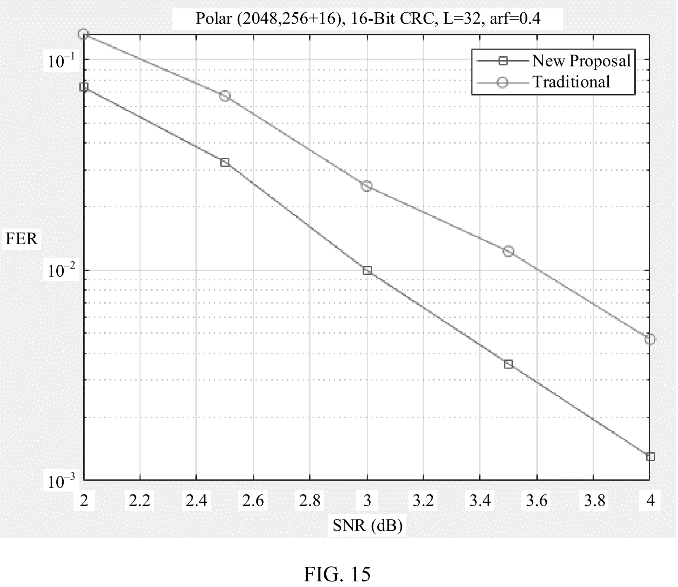

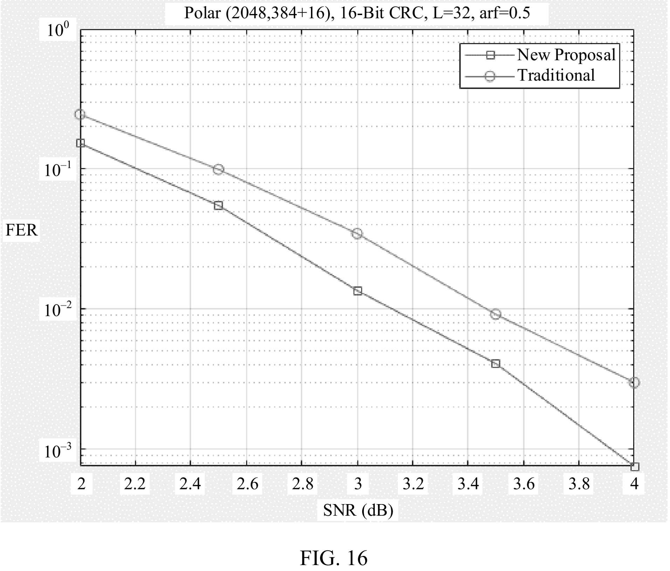

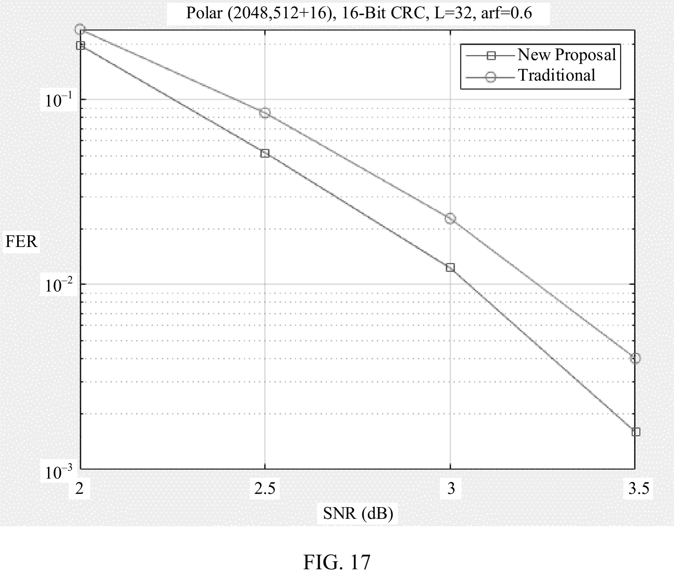

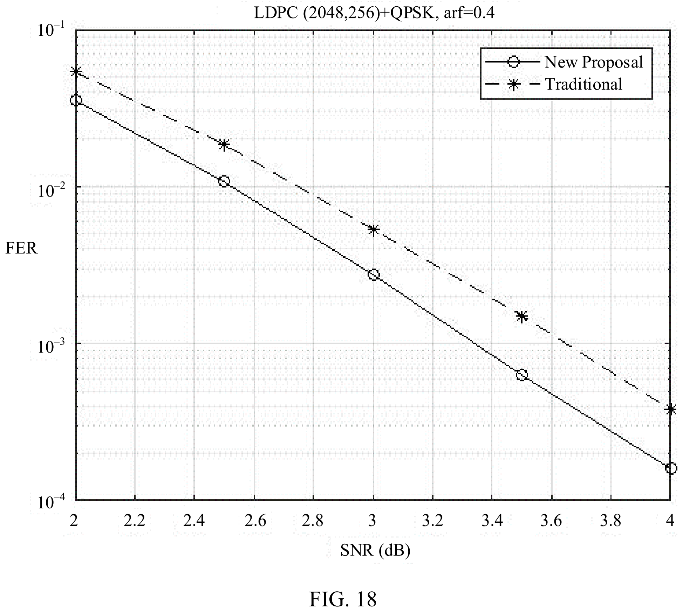

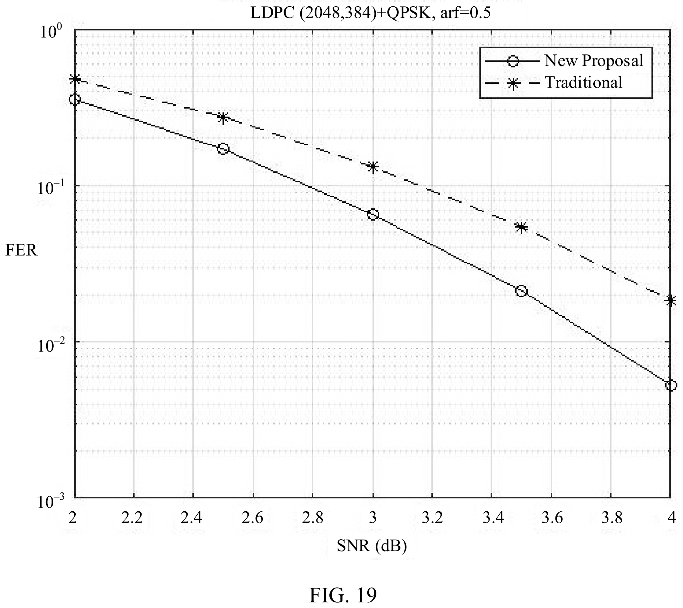

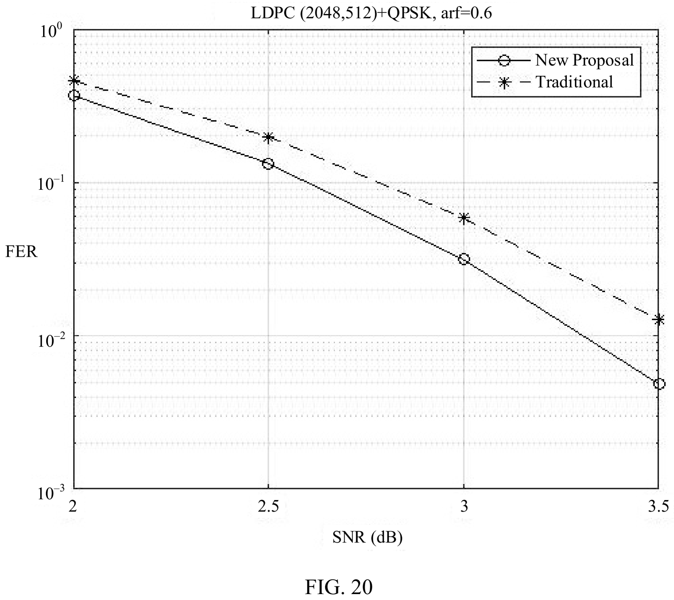

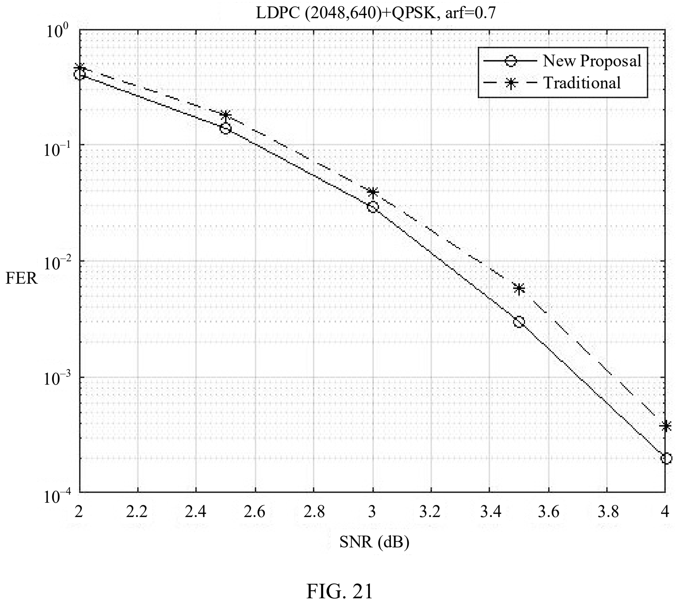

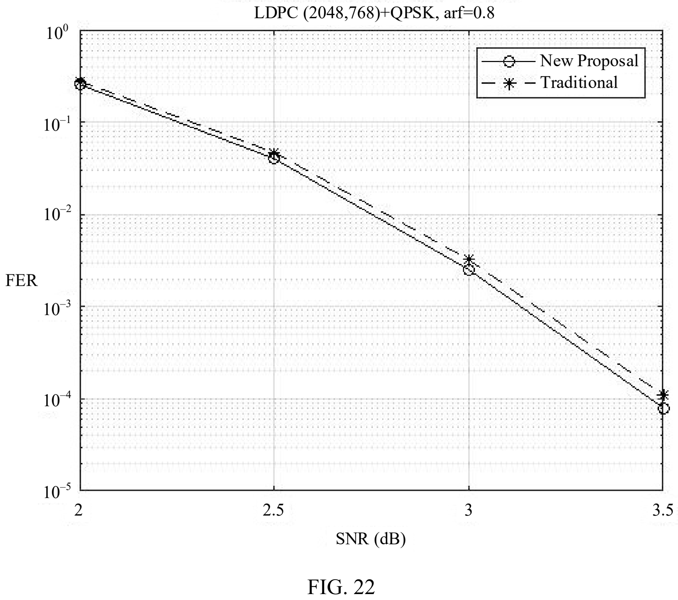

In this embodiment, polar code and 5G NR polar code are separately used for channel coding, and QPSK is used as a digital modulation scheme. SNR-FER performance of the user 2 is simulated when different values of $\alpha$ are given. FIG. 15 to FIG. 17 show simulation results in which the polar code is used for channel coding. A code length of the polar code is set to 2048, and a 16-bit CRC and a successive cancellation decoding algorithm in which a quantity of paths is 32 are used for decoding. "New Proposal" represents performance of the superposition coding scheme in this application, and "Traditional" represents performance of the conventional superposition coding. FIG. 18 to FIG. 23 show simulation results in which 5G NR LDPC code is used for channel coding. A code length is also set to 2048, and a quantity of decoding iterations is 20. It can be learned from the simulation results that decoding performance of the superposition coding scheme proposed in this application is better than that of the conventional superposition coding scheme, and smaller $\alpha$ indicates a larger gain. In other words, a transmission rate in the technical solution of this application is higher than that in the conventional superposition coding scheme.

The foregoing describes in detail the signal sending and receiving method provided in this application. The following describes a communication apparatus in this application.

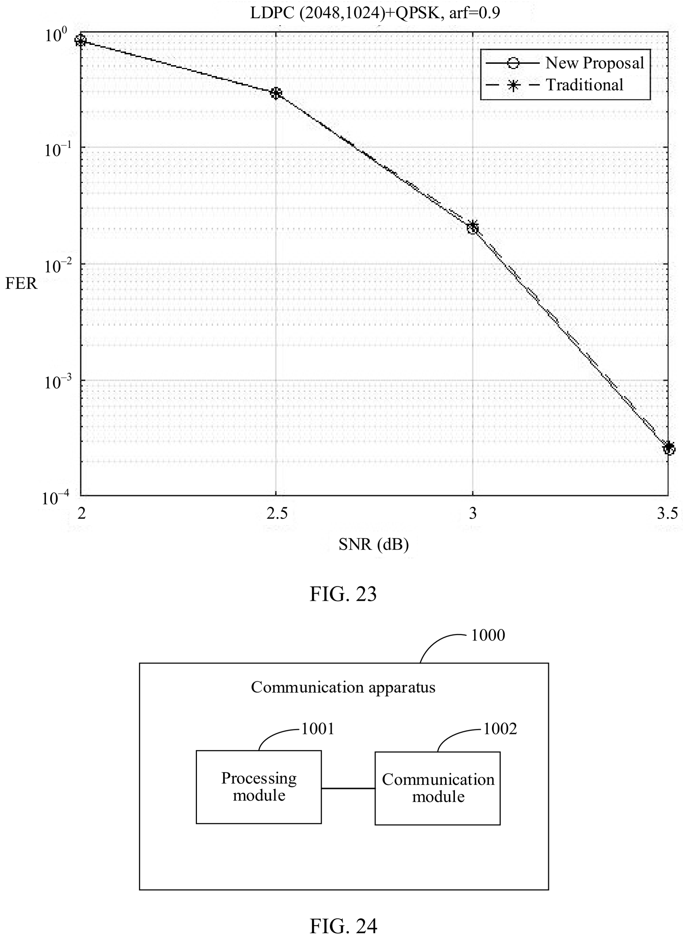

Refer to FIG. 24. This application provides a communication apparatus 1000.

As shown in FIG. 24, the communication apparatus 1000 includes a processing module 1001 and a communication module 1002. The communication apparatus 1000 may be a sending device, or may be a communication apparatus that is used in the sending device, that is used in combination with the sending device, or that can implement a method performed by the sending device, for example, a chip, a chip system, or a circuit. Alternatively, the communication apparatus 1000 may be a receiving device, or may be a communication apparatus that is used in the receiving device, that is used in combination with the receiving device, or that can implement a method performed by the receiving device, for example, a chip, a chip system, or a circuit. For example, when the communication apparatus 1000 is the sending device, the sending device may be the network device (or an access network device or a base station) in method embodiments of this application; and when the communication apparatus 1000 is the receiving device, the receiving device may be the terminal device (or a UE or a user) in method embodiments of this application.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the sending device or the receiving device in the foregoing methods. A component configured to implement a receiving function in the communication module may be considered as a receiving unit, and a component configured to implement a sending function in the communication module may be considered as a sending unit. That is, the communication module includes the receiving unit and the sending unit.

When the communication apparatus 1000 is used in the sending device, the processing module 1001 may be configured to implement processing functions of the sending device (for example, a base station) in embodiments in FIG. 6 to FIG. 9, FIG. 11, and FIG. 13, and the communication module 1002 may be configured to implement receiving and sending functions of the sending device (for example, a base station) in these embodiments.

When the communication apparatus 1000 is used in the receiving device, the processing module 1001 may be configured to implement processing functions of the receiving device (for example, a UE) in embodiments in FIG. 6 to FIG. 9, FIG. 11, and FIG. 13, and the communication module 1002 may be configured to implement receiving and sending functions of the receiving device (for example, a UE) in these embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation); and the processing module is an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

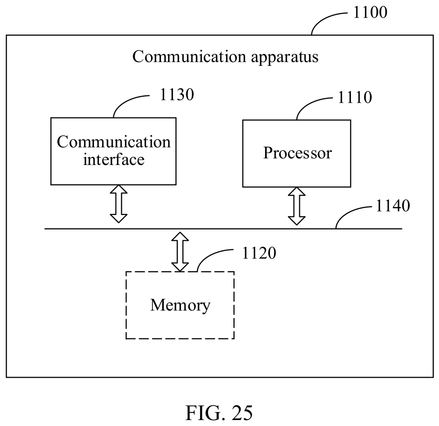

In addition, with reference to FIG. 25, this application further provides a communication apparatus 1100. Optionally, the communication apparatus 1100 may be a chip or a chip system. Optionally, in this application, the chip system may include a chip, or may include a chip and another discrete component.

The communication apparatus 1100 may be configured to implement a function of any device (for example, the sending device or the receiving device) in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or receive information) and output information (or send information). The processor is an integrated processor, a microprocessor, an integrated circuit, or a logic circuit. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 25, the processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 25, but it does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

In a possible implementation, the communication apparatus 1100 may be used in a sending device, for example, the network device in embodiments of this application. Specifically, the communication apparatus 1100 may be the sending device, or may be an apparatus that can support the sending device in implementing a corresponding function of the sending device in any one of the foregoing examples. The memory 1120 stores a computer program (or instructions) and/or data for implementing a corresponding function of the sending device in any one of the foregoing examples. The processor 1110 may execute the computer program stored in the memory 1120, to complete the method performed by the sending device in any one of the foregoing examples. The communication interface in the communication apparatus 1100 may be configured to interact with the receiving device (for example, the UE), and send information to the receiving device or receive information from the receiving device.

In another possible implementation, the communication apparatus 1100 may be used in a receiving device. Specifically, the communication apparatus 1100 may be the receiving device, or may be an apparatus that can support the receiving device in implementing a sending and receiving function in any one of the foregoing examples. The memory 1120 stores a computer program (or instructions) and/or data for implementing a function of the receiving device in any one of the foregoing examples. The processor 1110 may execute the computer program stored in the memory 1120, to complete the method performed by the receiving device in any one of the foregoing examples. The communication interface in the communication apparatus 1100 may be configured to interact with the sending device (for example, the access network device), to send information to the sending device or receive information from the sending device.

The communication apparatus 1100 provided in this example may be used in the sending device to complete the method performed by the sending device, or may be used in the receiving device to complete the method performed by the receiving device. Therefore, for technical effects that can be achieved by this example, refer to the descriptions in the foregoing method embodiments. Details are not described herein again.

Based on the foregoing example, this application provides a communication system. In an example, the communication system includes a sending device and a receiving device. Further, there are at least two receiving devices, and the receiving devices may implement the signal sending method and/or the signal receiving method provided in embodiments of this application.

In addition, this application provides a computer program product. The computer program product includes program instructions. When the program instructions are executed, the signal sending method and/or the signal receiving method provided in embodiments of this application are/is performed.

In addition, this application provides a computer-readable storage medium. The computer-readable storage medium stores a computer program or instructions. When the computer program or the instructions are run on a computer, the signal sending method and/or the signal receiving method provided in method embodiments of this application are/is implemented.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

At least one (item) in embodiments of this application indicates one (item) or more (items). "A plurality of (items) "means two (items) or more than two (items). "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish the objects from each other.

The term "include" and any other variant thereof mentioned in embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that in this application, terms such as "example" or "for example" are used to represent giving an example, an illustration, or a description. Any method or design solution described in this application as "example" or "for example" should not be explained as being more preferred or advantageous over another method or design solution. Specifically, use of the word like "example" or "for example" is intended to describe related technical solutions or concepts by using examples in a specific manner.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal sending method, applied to a first communication apparatus, and comprising:

   obtaining k pieces of first information, wherein the k pieces of first information correspond to k second communication apparatuses, $k \geq 2$, and k is an integer;
   obtaining k modulated signals based on the k pieces of first information;
   separately performing orthogonal spreading on the k modulated signals to obtain k first signals, wherein orthogonal spreading on a first modulated signal in the k modulated signals comprises: multiplying modulated symbols comprised in the first modulated signal respectively by corresponding vectors of a full-rank orthogonal matrix, and then performing summation; and the first modulated signal is any modulated signal in the k modulated signals;
   obtaining a superposed signal related to the k second communication apparatuses based on the k first signals; and
   sending the superposed signal.

2. The method according to claim 1, wherein obtaining the superposed signal related to the k second communication apparatuses based on the k first signals comprises:
   allocating different powers to the k first signals, and then performing superposition on the k first signals, to obtain the superposed signal.

3. The method according to claim 1, wherein obtaining the superposed signal related to the k second communication apparatuses based on the k first signals comprises:

   separately performing inner interleaving on the k first signals to obtain k second signals; and
   allocating different powers to the k second signals, and then performing superposition on the k second signals, to obtain the superposed signal.

4. The method according to any one of claims 1 to 3, wherein the k modulated signals comprise a same quantity of modulated symbols, or at least two of the k modulated signals comprise different quantities of modulated symbols.

5. The method according to any one of claims 1 to 4, wherein the k modulated signals comprise one or more second modulated signals, and a full-rank orthogonal matrix used for performing orthogonal spreading on the one or more second modulated signals is a Walsh matrix.

6. The method according to any one of claims 1 to 5, wherein obtaining the k modulated signals based on the k pieces of first information comprises:

separately modulating the k pieces of first information to obtain the k modulated signals; or
separately performing channel coding and modulation on the k pieces of first information to obtain the k modulated signals.

7. A signal receiving method, applied to a second communication apparatus j, and comprising:

receiving a superposed signal from a first communication apparatus, wherein the superposed signal is related to k second communication apparatuses, the second communication apparatus j is one of the k second communication apparatuses, $k \geq 2$ and k is an integer, $1 \leq j \leq k$, and j is an integer; and
performing decoding processing on the superposed signal to determine a signal belonging to the second communication apparatus j, wherein the decoding processing comprises de-orthogonal spreading; the de-orthogonal spreading is an inverse process of performing, by the first communication apparatus, orthogonal spreading on a modulated signal j corresponding to the second communication apparatus j; and the orthogonal spreading on the modulated signal j corresponding to the second communication apparatus j comprises: multiplying modulated symbols comprised in the modulated signal j respectively by corresponding vectors of a full-rank orthogonal matrix, and then performing summation.

8. The method according to claim 7, wherein performing decoding processing on the superposed signal to determine the signal belonging to the second communication apparatus j comprises:

performing decoding processing on the superposed signal based on a decoding order corresponding to successive interference cancellation, wherein signals from a second communication apparatus k to a second communication apparatus j+1 are used as Gaussian noise, the decoding order is from the second communication apparatus k to a second communication apparatus 1, and $1 \leq j < k$; or
performing decoding processing on the superposed signal, wherein signals from a second communication apparatus 1 to a second communication apparatus k-1 are used as Gaussian noise, and j=k.

9. The method according to claim 7 or 8, wherein the decoding processing further comprises de-interleaving, and the de-interleaving is performed before the de-orthogonal spreading.

10. The method according to any one of claims 7 to 9, wherein the decoding processing further comprises demodulation, and the demodulation is performed after the de-orthogonal spreading; or
the decoding processing further comprises demodulation and channel decoding, and the demodulation is performed after the de-orthogonal spreading.

11. A communication apparatus, comprising:
a processing module, configured to:

obtain k pieces of first information, wherein the k pieces of first information correspond to k second communication apparatuses, $k \geq 2$, and k is an integer;
obtain k modulated signals based on the k pieces of first information;
separately perform orthogonal spreading on the k modulated signals to obtain k first signals, wherein orthogonal spreading on a first modulated signal in the k modulated signals comprises: multiplying modulated symbols comprised in the first modulated signal respectively by corresponding vectors of a full-rank orthogonal matrix, and then performing summation; and the first modulated signal is any modulated signal in the k modulated signals; and
obtain a superposed signal related to the k second communication apparatuses based on the k first signals; And
a communication module, configured to send the superposed signal.

12. The communication apparatus according to claim 11, wherein the processing module is configured to:
allocate different powers to the k first signals, and then perform superposition on the k first signals, to obtain the superposed signal.

13. The communication apparatus according to claim 11, wherein the processing module is configured to:

> separately perform inner interleaving on the k first signals to obtain k second signals; and
> allocate different powers to the k second signals, and then perform superposition on the k second signals, to obtain the superposed signal.

14. The communication apparatus according to any one of claims 11 to 13, wherein the k modulated signals comprise a same quantity of modulated symbols, or at least two of the k modulated signals comprise different quantities of modulated symbols.

15. The communication apparatus according to any one of claims 11 to 14, wherein the k modulated signals comprise one or more second modulated signals, and a full-rank orthogonal matrix used for performing orthogonal spreading on the one or more second modulated signals is a Walsh matrix.

16. The communication apparatus according to any one of claims 11 to 15, wherein the processing module is configured to:

> separately modulate the k pieces of first information to obtain the k modulated signals; or
> separately perform channel coding and modulation on the k pieces of first information to obtain the k modulated signals.

17. A communication apparatus, comprising:

> a communication module, configured to receive a superposed signal from a first communication apparatus, wherein the superposed signal is related to k second communication apparatuses, the communication apparatus is one of the k second communication apparatuses, and $k \geq 2$ and k is an integer; and
> a processing module, configured to perform decoding processing on the superposed signal to determine a signal belonging to the communication apparatus, wherein the decoding processing comprises de-orthogonal spreading; the de-orthogonal spreading is an inverse process of performing, by the first communication apparatus, orthogonal spreading on a modulated signal corresponding to the communication apparatus; and the orthogonal spreading on the modulated signal corresponding to the communication apparatus comprises: multiplying modulated symbols comprised in the modulated signal corresponding to the communication apparatus respectively by corresponding vectors of a full-rank orthogonal matrix, and then performing summation.

18. The communication apparatus according to claim 17, wherein the processing module is configured to:

> perform decoding processing on the superposed signal based on a decoding order corresponding to successive interference cancellation, wherein signals from a second communication apparatus k to a second communication apparatus j+1 are used as Gaussian noise, the communication apparatus is a $j^{th}$ second communication apparatus in the decoding order, the decoding order is from the second communication apparatus k to a second communication apparatus 1, and $1 \leq j < k$; or
> perform decoding processing on the superposed signal, wherein signals from a second communication apparatus 1 to a second communication apparatus k-1 are used as Gaussian noise, and the communication apparatus is a $k^{th}$ second communication apparatus in the decoding order.

19. The communication apparatus according to claim 17 or 18, wherein the decoding processing further comprises de-interleaving, and the de-interleaving is performed before the de-orthogonal spreading.

20. The communication apparatus according to any one of claims 17 to 19, wherein the decoding processing further comprises demodulation, and the demodulation is performed after the de-orthogonal spreading; or the decoding processing further comprises demodulation and channel decoding, and the demodulation is performed after the de-orthogonal spreading.

21. A communication apparatus, comprising:
a processor, wherein the processor is coupled to a memory, and the processor is configured to invoke computer program instructions stored in the memory, to perform the method according to any one of claims 1 to 10.

22. A chip, comprising a processing circuit and a communication interface, wherein the communication interface is configured to receive data and/or information and transmit the received data and/or information to the processing circuit, and the processing circuit is configured to process the data and/or information to perform the method according to any one of claims 1 to 10.

23. A computer-readable storage medium, wherein the computer-readable storage medium stores instructions, and when the instructions are run on a computer, the computer is enabled to perform the method according to any one of claims 1 to 10.

24. A computer program product, wherein the computer program product comprises related program instructions, and when the related program instructions are executed, the method according to any one of claims 1 to 10 is implemented.

25. A communication system, comprising the communication apparatus according to any one of claims 11 to 16 and the communication apparatus according to any one of claims 17 to 20.

FIG. 1

FIG. 2

FIG. 3

Input → Decode a signal of a user k → Reconstruct the signal of the user k → (−) (+) (+)

Decode a signal of a user k–1 → Reconstruct the signal of the user k–1 → (−) (+) (+)

⋮

(+)

Decode a signal of a user 1

FIG. 4

Input → Decode a signal of a user k → Output

FIG. 5

FIG. 6

FIG. 7

200

First communication
apparatus

k second communication
apparatuses

Second
communication
apparatus j

210: Obtain k pieces of first
information, where the k pieces of first
information correspond to the k second
communication apparatuses, k≥2, and
k is an integer

220: Obtain k modulated
signals based on the k pieces of
first information

230: Separately perform orthogonal spreading on the k
modulated signals to obtain k first signals, where
orthogonal spreading on a first modulated signal in the
k modulated signals includes: multiplying modulated
symbols included in the first modulated signal
respectively by corresponding vectors of a full-rank
orthogonal matrix, and then performing summation

240: Obtain a superposed signal related to
the k second communication apparatuses
based on the k first signals

250: Superposed signal

260: Perform decoding processing on the
superposed signal to determine a signal
belonging to the second communication
apparatus j, where the decoding processing
includes de-orthogonal spreading, and the
de-orthogonal spreading is an inverse
process of the orthogonal spreading

FIG. 8

(a)

(b)

FIG. 9

FIG. 10

Power
gain $\alpha_1$

UE 1 → Polar encoding → QPSK → Orthogonal spreading → Inner interleaver $I_1$ → ⊗ → 

Power
gain $\alpha_2$

UE 2 → Polar encoding → QPSK → Orthogonal spreading → Inner interleaver $I_2$ → ⊗ → Superpose signals →

(a)

Power
gain $\alpha_1$

UE 1 → Polar encoding → QPSK → Orthogonal spreading → Inner interleaver $I_1$ → ⊗ →

Power
gain $\alpha_2$

Gaussian noise → ⊗ → Superpose signals →

(b)

FIG. 11

FIG. 12

FIG. 13

FIG. 14

FIG. 15

FIG. 16

FIG. 17

FIG. 18

FIG. 19

LDPC (2048,512)+QPSK, arf=0.6

FIG. 20

FIG. 21

FIG. 22

## LDPC (2048,1024)+QPSK, arf=0.9

FIG. 23

FIG. 24

FIG. 25

# INTERNATIONAL SEARCH REPORT

| International application No. |
|---|
| **PCT/CN2023/086639** |

## A. CLASSIFICATION OF SUBJECT MATTER

H04L1/00(2006.01)i

According to International Patent Classification (IPC) or to both national classification and IPC

## B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; IEEE; 3GPP: 叠加, 编码, 分层, 调制, 非正交编码接入, 非正交多址, 交错网格, 交织多址, 资源扩展多址, 快于奈奎斯特, 滤波器组多载波, 符号, 信号, 信息, 乘, 正交, 矩阵, 向量, 序列, 满秩, 沃尔什, SWSC, IGMA, FMBC, FTN, IDMA, NOCA, NOMA, RSMA, superposition coding, hierarchical modulation, non-orthogonal coded access, non-orthogonal multiple access, interleaved multiple access, filter bank multicarrier, resource extended multiple access, faster than nyquist, symbol, information, signal, bit, multiply, orthogonal, matrix, vector, sequence, walsh

## C. DOCUMENTS CONSIDERED TO BE RELEVANT

| Category* | Citation of document, with indication, where appropriate, of the relevant passages | Relevant to claim No. |
|---|---|---|
| X | KR 20190065637 A (KUMOH NATIONAL INSTITUTE OF TECHNOLOGY INDUSTRY-ACADEMIC COOPERATION FOUNDATION) 12 June 2019 (2019-06-12) description, paragraphs 0022-0113, and figures 1-5 | 1-25 |
| X | KR 20170037405 A (SAMSUNG ELECTRONICS CO., LTD. et al.) 04 April 2017 (2017-04-04) description, paragraphs 0050-0139, and figures 9-19 | 1-25 |
| A | CN 111937331 A (SAMSUNG ELECTRONICS CO., LTD.) 13 November 2020 (2020-11-13) entire document | 1-25 |
| A | CN 105872605 A (SHANGHAI NATIONAL ENGINEERING RESEARCH CENTER OF DIGITAL TELEVISION CO., LTD.) 17 August 2016 (2016-08-17) entire document | 1-25 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/086639** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111314705 A (TAIYUAN UNIVERSITY OF SCIENCE AND TECHNOLOGY) 19 June 2020 (2020-06-19)<br>entire document | 1-25 |
| A | US 2018076994 A1 (SAMSUNG ELECTRONICS CO., LTD.) 15 March 2018 (2018-03-15)<br>entire document | 1-25 |
| A | US 2018070274 A1 (FUJITSU LTD.) 08 March 2018 (2018-03-08)<br>entire document | 1-25 |

Form PCT/ISA/210 (second sheet) (July 2022)

EP 4 654 501 A1

## INTERNATIONAL SEARCH REPORT
### Information on patent family members

International application No.

**PCT/CN2023/086639**

| Patent document cited in search report | | | Publication date (day/month/year) | Patent family member(s) | | | Publication date (day/month/year) |
|---|---|---|---|---|---|---|---|
| KR | 20190065637 | A | 12 June 2019 | KR | 102054840 | B1 | 11 December 2019 |
| KR | 20170037405 | A | 04 April 2017 | KR | 102461179 | B1 | 01 November 2022 |
| CN | 111937331 | A | 13 November 2020 | US | 2021044372 | A1 | 11 February 2021 |
| | | | | US | 11469846 | B2 | 11 October 2022 |
| | | | | WO | 2019194577 | A1 | 10 October 2019 |
| | | | | KR | 20190116845 | A | 15 October 2019 |
| | | | | KR | 102420816 | B1 | 14 July 2022 |
| | | | | EP | 3745620 | A1 | 02 December 2020 |
| | | | | EP | 3745620 | A4 | 10 March 2021 |
| CN | 105872605 | A | 17 August 2016 | CN | 105872605 | B | 12 June 2018 |
| CN | 111314705 | A | 19 June 2020 | CN | 111314705 | B | 11 April 2023 |
| US | 2018076994 | A1 | 15 March 2018 | WO | 2016167630 | A1 | 20 October 2016 |
| | | | | US | 10411932 | B2 | 10 September 2019 |
| | | | | KR | 20160123873 | A | 26 October 2016 |
| | | | | KR | 102287875 | B1 | 09 August 2021 |
| | | | | US | 2021211337 | A1 | 08 July 2021 |
| | | | | US | 11558228 | B2 | 17 January 2023 |
| | | | | US | 2019363918 | A1 | 28 November 2019 |
| | | | | US | 10958495 | B2 | 23 March 2021 |
| US | 2018070274 | A1 | 08 March 2018 | US | 10701604 | B2 | 30 June 2020 |
| | | | | WO | 2016185530 | A1 | 24 November 2016 |
| | | | | JPWO | 2016185530 | A1 | 15 March 2018 |
| | | | | JP | 6583405 | B2 | 02 October 2019 |
| | | | | EP | 3297306 | A1 | 21 March 2018 |
| | | | | EP | 3297306 | A4 | 04 April 2018 |

Form PCT/ISA/210 (patent family annex) (July 2022)